# EUROPÄISCHE PATENTSCHRIFT

(11) **EP 3 741 610 B1**
(45) Veröffentlichungstag und Bekanntmachung des Hinweises auf die Patenterteilung: **23.08.2023**
(21) Anmeldenummer: 20169728.1
(22) Anmeldetag: 15.04.2020
(51) Int. Cl.: B60L 53/16, H01R 13/639, H01R 13/66, G06F 21/32

(54) **VERFAHREN ZUR STEUERUNG EINES SICHERHEITSSYSTEMS EINER LADESTATION ZUM AUFLADEN VON ELEKTROFAHRZEUGEN**
METHOD FOR CONTROLLING A SAFETY SYSTEM OF A CHARGING STATION FOR CHARGING ELECTRIC VEHICLES
PROCÉDÉ DE COMMANDE D'UN SYSTÈME DE SÉCURITÉ D'UNE STATION DE RECHARGE PERMETTANT DE RECHARGER DES VÉHICULES ÉLECTRIQUES

(30) Priorität: 23.05.2019 DE 102019207566
(43) Veröffentlichungstag der Anmeldung: 25.11.2020
(73) Patentinhaber: VOLKSWAGEN AG, 38440 Wolfsburg (DE)
(72) Erfinder: Hirsch, Michael, 31226 Peine (DE); Rendel, Holger, 38112 Braunschweig (DE); Schondorff, Erik, 39108 Magdeburg (DE); Meitzner, Matthias, 38176 Wendeburg (DE)

(56) Entgegenhaltungen:
- EP-A1- 3 472 033
- WO-A1-2010/058742
- US-A1- 2012 217 928
- US-A1- 2017 046 508
- US-A1- 2019 066 416

## Beschreibung

Die Erfindung betrifft ein Verfahren zur Steuerung eines Sicherheitssystems einer Ladestation zum Aufladen von Elektrofahrzeugen nach dem unabhängigen Verfahrensanspruch. Zudem betrifft die Erfindung ein entsprechendes Sicherheitssystem für eine Ladestation zum Aufladen von Elektrofahrzeugen.

Bei modernen Ladestationen zum Aufladen von Elektrofahrzeugen ist zumeist ein separater Authentifizierungsschritt vorgesehen, der bspw. an der Ladestation selbst oder über eine Smartphone-App durchgeführt wird. Bei dem Authentifizierungsschritt können unter anderem biometirische Daten erfasst werden, die zur Authentifizierung eines berechtigten Benutzers dienen können. Beispielhafte Verfahren zur Steuerung eines Sicherheitssystems einer Ladestation sind aus den Druckschriften DE 10 2010 032 580 A1, US 2019/0066416 A1 oder US 2012/0217928 A1 bekannt. Ein separater Authentifizierungsschritt ist von dem Benutzer als solcher wahrnehmbar. Bei einem solchen separaten Authentifizierungsschritt kann eine intuitive und fließende Bedienung der Ladestation erschwert werden.

Die Aufgabe der Erfindung ist daher, ein verbessertes Verfahren zur Steuerung eines Sicherheitssystems einer Ladestation zum Aufladen von Elektrofahrzeugen bereitzustellen, das die oben genannten Nachteile zumindest zum Teil überwindet. Insbesondere ist es die Aufgabe der Erfindung, ein Verfahren zur Verfügung zu stellen, das eine intuitive und fließende Bedienung der Ladestation ermöglicht, das schnell und unbemerkbar durchgeführt werden kann und das einen verbesserten Komfort bei der Bedienung der Ladestation ermöglicht. Ein Benutzer soll dabei möglichst keinen separaten Authentifizierungsschritt wahrnehmen sowie keine kontaktlosen und/oder kontaktbehafteten Identifizierungsgegenstände mit sich tragen. Das Verfahren im Sinne der Erfindung soll möglichst sicher ablaufen, ohne die Gefahr, dass ein Sicherheitscode abgefangen und/oder kopiert wird. Das Verfahren im Sinne der Erfindung soll zudem eine möglichst einfache Infrastruktur am Sicherheitssystem benötigen. Zudem ist es die Aufgabe der Erfindung, ein entsprechendes Sicherheitssystem für eine Ladestation zum Aufladen von Elektrofahrzeugen bereitzustellen.

Die erfindungsgemäße Aufgabe wird durch ein Verfahren zur Steuerung eines Sicherheitssystems einer Ladestation zum Aufladen von Elektrofahrzeugen mit den Merkmalen des unabhängigen Verfahrensanspruches, insbesondere aus dem kennzeichnenden Teil, gelöst. Zudem wird die erfindungsgemäße Aufgabe durch ein entsprechendes Sicherheitssystem für eine Ladestation zum Aufladen von Elektrofahrzeugen gelöst. In den abhängigen Ansprüchen sind bevorzugte Weiterbildungen der Erfindung aufgeführt. Merkmale, die zu den einzelnen Erfindungsaspekten offenbart werden, können in der Weise miteinander kombiniert werden, dass bezüglich der Offenbarung zu den Erfindungsaspekten der Erfindung stets wechselseitig Bezug genommen wird bzw. werden kann.

Die Erfindung stellt ein Verfahren zur Steuerung eines Sicherheitssystems einer Ladestation zum Aufladen von Elektrofahrzeugen bereit, wobei das Sicherheitssystem folgende Elemente aufweist: einen Ladestecker, wobei der Ladestecker eine Sensoreinheit zur Erfassung von biometrischen Daten eines Benutzers aufweist, die zur Authentifizierung des Benutzers bei dem Sicherheitssystem dienen, und eine Steuereinheit zum Auswerten von biometrischen Daten des Benutzers. Hierzu ist es erfindungsgemäß vorgesehen, dass die Steuereinheit aus den biometrischen Daten des Benutzers mehrere Merkmale extrahiert, und dass die Steuereinheit die Merkmale der biometrischen Daten in mehreren Stufen auswertet.

Im Rahmen der Erfindung kann die Sensoreinheit zur Erfassung von biometrischen Daten eines Benutzers optische, kapazitive und/oder akustische Sensorelemente, bspw. in Form von Fingerabdruckscanner, aufweisen.

Ferner ist es im Rahmen der Erfindung denkbar, dass die Sensoreinheit zur Erfassung von biometrischen Daten eines Benutzers mehrere vereinzelte und/oder großflächige und/oder streifenförmige Sensorelemente aufweisen kann, um insbesondere komplexe Merkmale der biometrischen Daten zu extrahieren und daraus sogar komplexe Bewegungsabläufe, Gestiken und/oder Greifmuster erkennen zu können.

Extrahieren heißt im Sinne der Erfindung, dass die Steuereinheit aus der Fülle von erfassten Daten bestimmte charakteristische Merkmale in den biometrischen Daten erkennt, die eine schnelle, sichere und zuverlässige Authentifizierung des Benutzers ermöglichen können.

Die Merkmale der biometrischen Daten im Rahmen der Erfindung können persönliche, physische Eigenschaften des Benutzers abbilden, die zur Authentifizierung des Benutzers bei dem Sicherheitssystem dienen können.

Im Rahmen der Erfindung ist es weiterhin denkbar, dass die Merkmale der biometrischen Daten mindestens eines der folgenden Merkmale umfassen können:
- M1: Referenzposition der Finger und/oder der Hand des Benutzers,
- M2: relative Position der einzelnen Fingerspitzen zueinander und/oder zu der jeweiligen Referenzposition der Finger,
- M3: Fingerorientierung,
- M4: Rotation der Finger,
- M5: Fingerabdruck und/oder Handflächenabdruck, usw.

Der Erfindungsgedanke liegt dabei darin, dass die Authentifizierung des Benutzers bei dem Sicherheitssystem während eines Steckvorganges des Ladesteckers in eine korrespondierende Steckdose durchgeführt wird. Der Benutzer nimmt dabei vorteilhafterweise keinen separaten Authentifizierungsschritt wahr. Hierzu wird ein schnelles und sicheres Verfahren zur Verfügung gestellt, das eine intuitive und fließende Bedienung der Ladestation ermöglicht, das schnell und unbemerkbar durchgeführt werden kann und das einen verbesserten Komfort bei der Bedienung der Ladestation ermöglicht. Der Benutzer muss dabei keine kontaktlose und/oder kontaktbehaftete Identifizierungsgegenstände mit sich tragen. Außerdem wird die Gefahr, dass ein Sicherheitscode abgefangen und/oder kopiert wird, mithilfe der Erfindung erheblich vermieden. Das Verfahren erfordert außerdem lediglich eine einfache Infrastruktur am Sicherheitssystem.

Der Erfindungsgedanke liegt weiterhin darin, dass zur Authentifizierung des Benutzers die Merkmale der biometrischen Daten in mehreren Stufen ausgewertet werden. Durch die mehrstufige Auswertung erwachsen viele bedeutende Vorteile der Erfindung. Zum einen ermöglicht die Auswertung in einer ersten Stufe ein grobes Aussortieren fehlerhafter Authentifizierungsversuche. Zum anderen ermöglicht die Auswertung in einer zweiten Stufe ein feines Auswerten von Merkmalen der biometrischen Daten. Während der ersten Stufe und der zweiten Stufe sind weitere (Unter-)Schritte vorgesehen, die ein schnelles Abschließen der Auswertung ermöglichen können. Dazu kommt noch, dass in einer zweiten Stufe komplexe Algorithmen verwendet werden können. Denkbar ist weiterhin ein intelligentes Anlernen einer Auswertungslogik der Steuereinheit nach Art eines neuronalen Netzes, um die Authentifizierung des Benutzers im Sinne der Erfindung noch weiter zu verbessern und noch genauer und somit zuverlässiger sowie noch schneller und komfortabler zu gestalten.

Ferner sieht die Erfindung bei einem Verfahren zur Steuerung eines Sicherheitssystems einer Ladestation zum Aufladen von Elektrofahrzeugen vor, dass die mehreren Stufen der Auswertung eine erste Stufe umfassen, bei der die Merkmale der biometrischen Daten mit entsprechenden Schwellenwerten verglichen werden. Somit kann ein grobes Aussortieren von fehlerhaften Authentifizierungsversuchen mit wenig Rechenleistung und/oder Rechenaufwand ermöglicht werden.

Weiterhin sieht die Erfindung bei einem Verfahren zur Steuerung eines Sicherheitssystems einer Ladestation zum Aufladen von Elektrofahrzeugen vor, dass die mehreren Stufen der Auswertung eine zweite Stufe umfassen, bei der der zeitliche Verlauf der biometrischen Daten mithilfe einer Auswertungslogik analysiert wird, um eine Greifmustererkennung zur Authentifizierung des Benutzers durchzuführen. Somit kann ein feines Analysieren von biometrischen Daten ermöglicht werden, das die Genauigkeit und die Zuverlässigkeit des erfindungsgemäßen Verfahrens erhöhen kann.

Des Weiteren kann die Erfindung bei einem Verfahren zur Steuerung eines Sicherheitssystems einer Ladestation zum Aufladen von Elektrofahrzeugen vorsehen, dass bei der ersten Stufe der Auswertung für jeden Vergleich der Merkmale der biometrischen Daten mit entsprechenden Schwellenwerten ein entsprechendes Vergleichsergebnis in Prozentzahlen zwischen 0% und 100% ausgegeben wird. Somit können einfach und schnell einfache und repräsentative Vergleichsergebnisse bei der Auswertung von biometrischen Daten bereitgestellt werden.

Zudem kann die Erfindung bei einem Verfahren zur Steuerung eines Sicherheitssystems einer Ladestation zum Aufladen von Elektrofahrzeugen vorsehen, dass bei der ersten Stufe der Auswertung für jeden Vergleich der Merkmale der biometrischen Daten mit entsprechenden Schwellenwerten ein entsprechendes Vergleichsergebnis mit jeweils einem im Vorfeld definierten Wichtungsfaktor verrechnet wird. Auf diese Weise kann eine Gewichtung der Merkmale vorgenommen werden. Mit anderen Worten kann somit die Wichtigkeit der Merkmale im Gesamtergebnis bestimmt werden. So kann erfahrungsgemäß festgestellt werden, dass bspw. die Fingerorientierung und/oder der Fingerabdruck wichtige Merkmale sind oder ein wichtiges Merkmal ist, bei dem die meisten fehlerhaften Authentifizierungsversuche scheitern. Diesem Merkmal kann dann im Rahmen der Erfindung eine höhere Gewichtung zugeordnet werden. Mithin kann ein grobes Aussortieren von fehlerhaften Authentifizierungsversuchen noch weiter verbessert werden.

Außerdem kann die Erfindung bei einem Verfahren zur Steuerung eines Sicherheitssystems einer Ladestation zum Aufladen von Elektrofahrzeugen vorsehen, dass bei der ersten Stufe die Auswertung abgebrochen wird und die Authentifizierung des Benutzers als fehlgeschlagen gilt, wenn ein gewichtetes Vergleichsergebnis von mindestens einem ausgewählten Merkmal der biometrischen Daten eine kritische Grenze, insbesondere 30%, unterschreitet, oder wenn mindestens ein gewichtetes Vergleichsergebnis von mindestens einem Merkmal der Merkmale der biometrischen Daten eine kritische Grenze, insbesondere 30%, unterschreitet. Auf diese Weise kann ein Aussortieren offensichtlich fehlerhafter Authentifizierungsversuche beschleunigt werden.

Ferner kann die Erfindung bei einem Verfahren zur Steuerung eines Sicherheitssystems einer Ladestation zum Aufladen von Elektrofahrzeugen vorsehen, dass die Vergleichsergebnisse, die mit definierten Wichtungsfaktoren verrechnet wurden, zu einer Gesamtkennzahl zusammengerechnet werden. Somit kann ein kombiniertes, repräsentatives Vergleichsergebnis in der ersten Stufe der Auswertung bereitgestellt werden.

Weiterhin kann die Erfindung bei einem Verfahren zur Steuerung eines Sicherheitssystems einer Ladestation zum Aufladen von Elektrofahrzeugen vorsehen, dass die Auswertung bei der ersten Stufe abgebrochen wird und die Authentifizierung des Benutzers als fehlgeschlagen gilt, wenn die Gesamtkennzahl eine erste Grenze, insbesondere 50%, unterschreitet, und/oder dass die Auswertung in die zweite Stufe übergeleitet wird, wenn die Gesamtkennzahl in zwischen einer ersten Grenze, insbesondere 50%, und einer zweiten Grenze, insbesondere 80%, liegt, und/oder dass die Auswertung bei der ersten Stufe abgeschlossen wird und die Authentifizierung des Benutzers als erfolgreich gilt, wenn die Gesamtkennzahl eine zweite Grenze, insbesondere 80%, überschreitet. Auf diese Weise kann ein verbessertes, selektives Fortführen des erfindungsgemäßen Verfahrens ermöglicht werden, wenn dies erforderlich ist. Zugleich können somit gut erkennbare positive und negative Ergebnisse der Authentifizierung bereits in der ersten Stufe des Verfahrens gefunden werden.

Des Weiteren kann die Erfindung bei einem Verfahren zur Steuerung eines Sicherheitssystems einer Ladestation zum Aufladen von Elektrofahrzeugen vorsehen, dass bei der zweiten Stufe der Auswertung die Merkmale der biometrischen Daten zu, vorzugsweise zeitabhängigen, Funktionsmerkmalen, insbesondere zu bestimmten diskreten Zeitpunkten oder kontinuierlich, verarbeitet werden. Auf diese Weise können mithilfe des Verfahrens ganze Bewegungsabläufe, Gestiken und/oder Greifmuster erkannt werden, die die Zuverlässigkeit und die Sicherheit der Authentifizierung erheblich erhöhen können. Hierzu können bestimmte Identitäten zum Authentifizieren des Benutzers angelegt werden, die durch eine Kombination an speziellen Funktionsmerkmalen charakterisiert sein können. Mit anderen Worten können die Funktionsmerkmale die Eigenschaften einer Identität darstellen.

Zudem kann die Erfindung bei einem Verfahren zur Steuerung eines Sicherheitssystems einer Ladestation zum Aufladen von Elektrofahrzeugen vorsehen, dass die Funktionsmerkmale der biometrischen Daten mindestens eines der folgenden Funktionsmerkmale umfassen:
- F1: Berührte Fläche (Anzahl, Orte),
- F2: Ausgeübter Druck (Anzahl, Orte),
- F3: Erkannte Finger (Anzahl, Typ),
- F4: Dauer von bestimmten Abschnitten des Vorganges (z. B. zwischen der Berührung des ersten Fingers und der Berührung des zweiten Fingers, usw.

Auf diese Weise können die Genauigkeit und die Feinfühligkeit der Auswertung erheblich erhöht werden.

Außerdem kann die Erfindung bei einem Verfahren zur Steuerung eines Sicherheitssystems einer Ladestation zum Aufladen von Elektrofahrzeugen vorsehen, dass bei der zweiten Stufe der Auswertung die Funktionsmerkmale mit entsprechenden Funktionsmerkmalen verschiedener Identitäten verglichen werden. Auf diese Weise können verschiedene Identitäten erkannt werden, die die Ladestation bedienen wollen, und insbesondere ausgewählte Identitäten schnell und sicher erkannt werden, die zum Bedienen der Ladestation berechtigt sind.

Ferner kann die Erfindung bei einem Verfahren zur Steuerung eines Sicherheitssystems einer Ladestation zum Aufladen von Elektrofahrzeugen vorsehen, dass beim Vergleichen der Funktionsmerkmale mit entsprechenden Funktionsmerkmalen verschiedener Identitäten ein bestimmter Abstand berücksichtigt wird. Auf diese Weise kann eine Verfeinerung der Ergebnisse beim Auswerten der biometrischen Daten erzielt werden. Zudem kann somit eine Berücksichtigung reduzierter Anzahl an repräsentativen Ergebnissen ermöglicht werden.

Weiterhin kann die Erfindung bei einem Verfahren zur Steuerung eines Sicherheitssystems einer Ladestation zum Aufladen von Elektrofahrzeugen vorsehen, dass beim Vergleichen der Funktionsmerkmale mit entsprechenden Funktionsmerkmalen verschiedener Identitäten die Ergebnisse der Auswertung bei der ersten Stufe berücksichtigt werden. Somit kann ein schnelleres positives Ergebnis bereitgestellt werden, bspw. wenn in der ersten Stufe eine hohe Gesamtkennzahl bei den aufsummierten und gewichteten Merkmalen der biometrischen Daten berechnet wurde.

Des Weiteren kann die Erfindung bei einem Verfahren zur Steuerung eines Sicherheitssystems einer Ladestation zum Aufladen von Elektrofahrzeugen vorsehen, dass bei jeder Übereinstimmung der Funktionsmerkmale mit entsprechenden Funktionsmerkmalen bestimmter bzw. erkannter Identitäten ein Treffer für die jeweilige Identität aufsummiert wird. Somit kann eine Annäherung an die richtige Identität einfach und intuitiv durchgeführt werden.

Zudem kann die Erfindung bei einem Verfahren zur Steuerung eines Sicherheitssystems einer Ladestation zum Aufladen von Elektrofahrzeugen vorsehen, dass die jeweilige Identität als erkannt gilt, die die meisten Treffer erhält. Somit kann ein sicheres und plausibles Ergebnis bei der Auswertung bereitgestellt werden.

Außerdem kann die Erfindung bei einem Verfahren zur Steuerung eines Sicherheitssystems einer Ladestation zum Aufladen von Elektrofahrzeugen vorsehen, dass die jeweilige Identität als erkannt gilt, die eine erste, insbesondere bestimmte, Anzahl an Treffern, sog. Mindestquote, erhält. Somit kann das Verfahren beschleunigt werden, wobei eine positive Authentifizierung unmittelbar ausgegeben wird, sobald diese feststeht, ohne alle eventuelle Identitäten und/oder deren Funktionsmerkmale bis ins kleinste Detail auswerten zu müssen.

Ferner kann die Erfindung bei einem Verfahren zur Steuerung eines Sicherheitssystems einer Ladestation zum Aufladen von Elektrofahrzeugen vorsehen, dass, wenn eine bestimmte bzw. erkannte Identität eine zweite, insbesondere bestimmte, Anzahl an Treffern, sog. Höchstquote, erhält, die Funktionsmerkmale dieser bestimmten Identität für ein Aktualisieren und/oder Verifizieren dieser bestimmten Identität und/oder für ein Anlernen der Auswertungslogik verwendet werden können. Somit kann ein verbessertes Verfahren für die selbstlernende, intelligente Auswertungslogik innerhalb der Steuereinheit bereitgestellt werden.

Weiterhin kann die Erfindung bei einem Verfahren zur Steuerung eines Sicherheitssystems einer Ladestation zum Aufladen von Elektrofahrzeugen vorsehen, dass das erfindungsgemäße Verfahren zum Anlegen und/oder Anlernen neuer Identitäten genutzt werden kann, bspw. wenn nur eine Identität erkannt wurde.

Ein Anlernen der Auswertungslogik kann bewusst bzw. manuell eingeleitet, bspw. über ein Konfigurationsmenü an der Ladestation erfolgen. Zudem ist es denkbar, dass ein Anlernen der Auswertungslogik automatisiert und/oder kontinuierlich erfolgen kann, indem bspw. ein Mittelwert extrahierter und ausgewerteter Merkmale als Schwellenwerte und/oder aus diesen Merkmalen hergeleiteter Funktionsmerkmale immer wieder als Referenzwerte für die bestimmte bzw. erkannte Identität aktualisiert wird.

Des Weiteren ist es im Rahmen der Erfindung denkbar, dass mindestens ein Verfahrensschritt zum Extrahieren der Merkmale aus den biometrischen Daten, Durchführen einer ersten Stufe der Auswertung und/oder Durchführen einer zweiten Stufe der Auswertung auf ein Backend ausgelagert wird. Somit kann die Rechenleistung ganz oder zum Teil ausgelagert werden.

Zudem wird die erfindungsgemäße Aufgabe durch ein entsprechendes Sicherheitssystem für eine Ladestation zum Aufladen von Elektrofahrzeugen gelöst, wobei das Sicherheitssystem folgende Elemente aufweist: einen Ladestecker, wobei der Ladestecker eine Sensoreinheit zur Erfassung von biometrischen Daten eines Benutzers aufweist, die zur Authentifizierung des Benutzers bei dem Sicherheitssystem dienen, und eine Steuereinheit zum Auswerten von biometrischen Daten des Benutzers. Erfindungsgemäß ist die Steuereinheit dazu ausgeführt, aus den biometrischen Daten des Benutzers mehrere Merkmale zu extrahieren und die Merkmale der biometrischen Daten in mehreren Stufen auszuwerten. Mithilfe des erfindungsgemäßen Sicherheitssystems werden die gleichen Vorteile erreicht, die oben im Zusammenhang mit dem erfindungsgemäßen Verfahren beschrieben wurden. Auf diese Merkmale wird vorliegend vollumfänglich Bezug genommen.

Vorteilhafterweise kann die Steuereinheit speziell dazu ausgeführt sein, ein Verfahren ganz oder zum Teil durchzuführen, welches wie oben beschrieben ablaufen kann.

Weitere, die Erfindung verbessernde Maßnahmen werden nachstehend mit der Beschreibung der bevorzugten Ausführungsbeispiele der Erfindung anhand der Figuren näher dargestellt. Dabei ist zu beachten, dass die Figuren nur einen beschreibenden Charakter haben und nicht dazu gedacht sind, die Erfindung in irgendeiner Form einzuschränken. Es zeigen:
- Fig. 1: eine schematische Darstellung eines Verfahrens im Rahmen der Erfindung mit Auswertungsbeispielen einer ersten Stufe,
- Fig. 2: eine schematische Darstellung eines Verfahrens im Rahmen der Erfindung mit Auswertungsbeispielen einer zweiten Stufe,
- Fig. 3: ein schematisches Ablaufdiagramm eines Verfahrens im Rahmen der Erfindung,
- Fig. 4: einen beispielhaften Ladestecker im Rahmen der Erfindung, und
- Fig. 5: ein beispielhaftes Sicherheitssystem im Rahmen der Erfindung.

In den nachfolgenden Figuren werden für die gleichen technischen Merkmale auch von unterschiedlichen Ausführungsbeispielen die identischen Bezugszeichen verwendet.

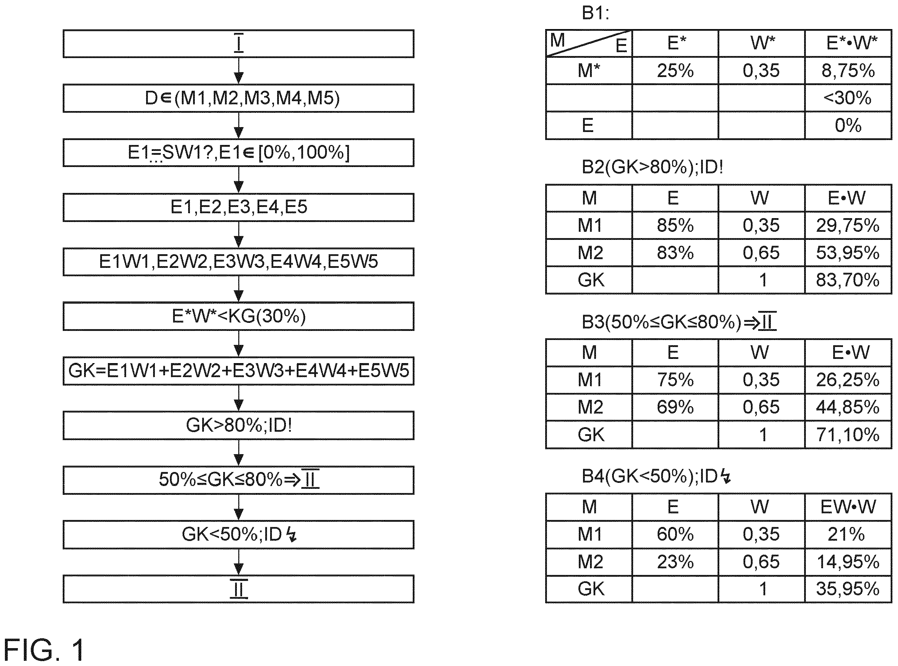

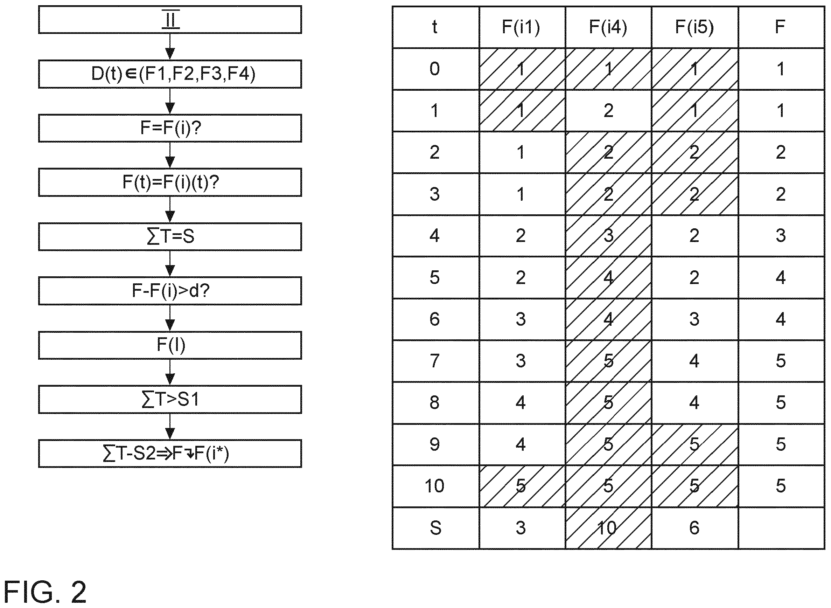

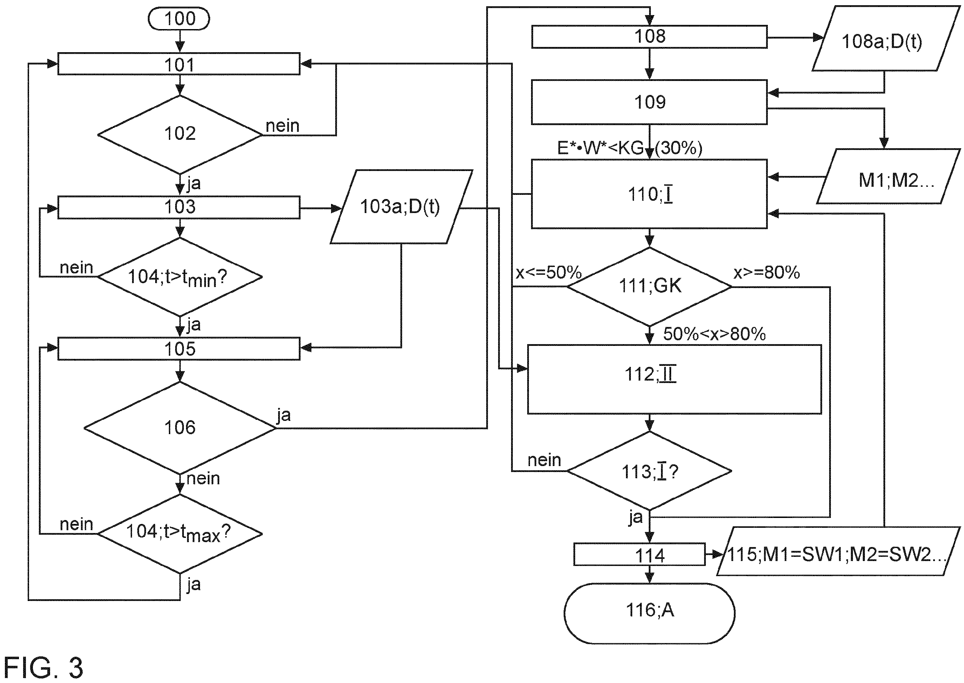

Die Figur 1 zeigt eine erste Stufe I eines erfindungsgemäßen Verfahrens. Die Figur 2 zeigt eine zweite Stufe II des erfindungsgemäßen Verfahrens. Ein schematisches Ablaufdiagramm eines Verfahrens samt der ersten Stufe I und der zweiten Stufe II ist in der Figur 3 dargestellt.

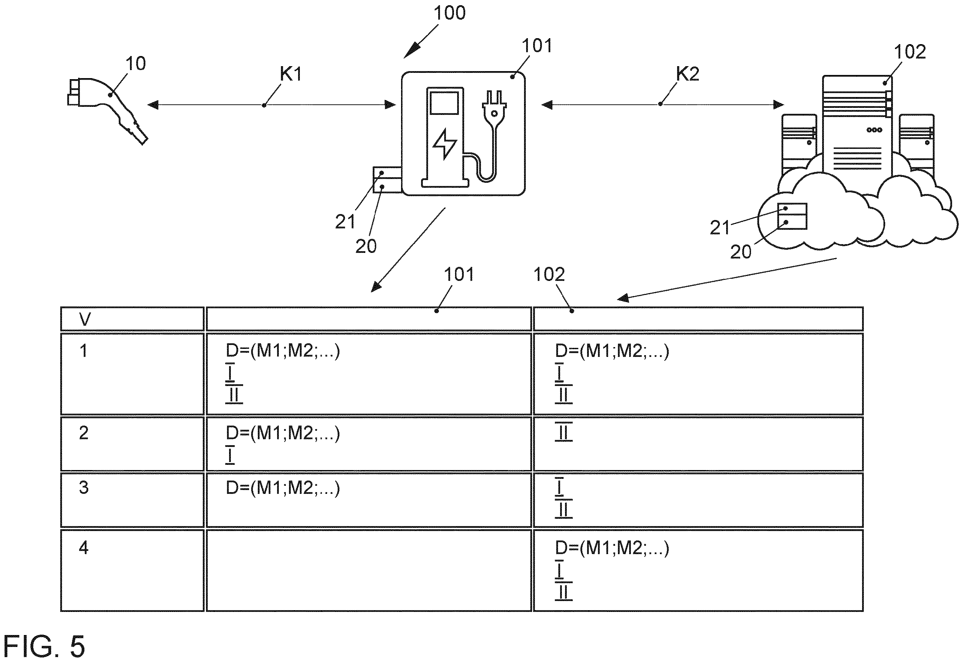

Das erfindungsgemäße Verfahren dient zur Steuerung eines Sicherheitssystems 100 einer Ladestation 101 zum Aufladen von Elektrofahrzeugen, wobei das Sicherheitssystem 100 in der Figur 5 schematisch abgebildet ist. Wie es in der Figur 5 gezeigt ist, weist das Sicherheitssystem 100 folgende Elemente auf: einen Ladestecker 10 und eine Steuereinheit 20.

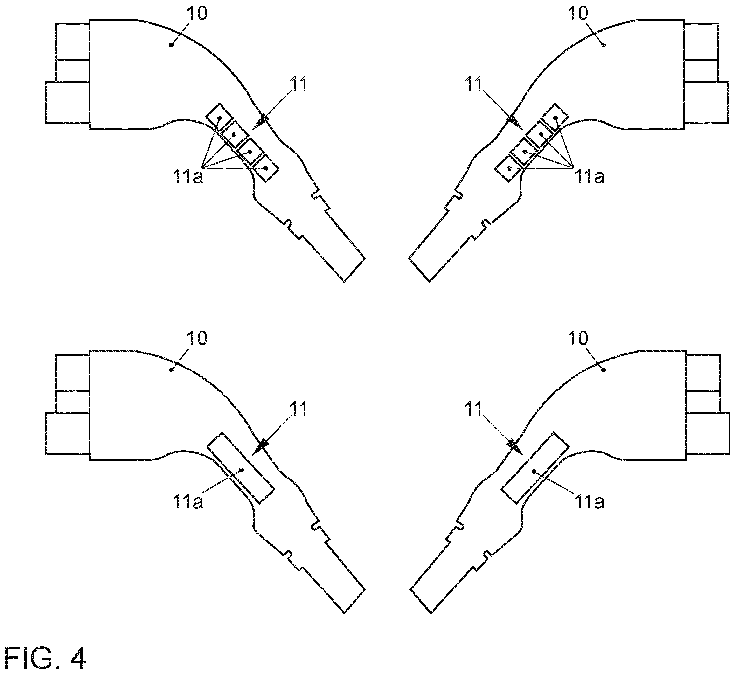

Der Ladestecker 10 ist außerdem in der Figur 4 gezeigt, in der verdeutlicht ist, dass der Ladestecker 10 eine Sensoreinheit 11 zur Erfassung von biometrischen Daten D eines Benutzers aufweist. Die biometrischen Daten D dienen zur Authentifizierung des Benutzers bei dem Sicherheitssystem 100. Die Sensoreinheit 11 kann zur Erfassung von biometrischen Daten D eines Benutzers optische, kapazitive und/oder akustische Sensorelemente 11a, bspw. in Form von Fingerabdruckscanner, aufweisen. Denkbar ist zudem, dass die Sensoreinheit 11 zur Erfassung von biometrischen Daten D eines Benutzers mehrere vereinzelte Sensorelemente 11a (siehe obere Ansichten in der Figur 4) und/oder großflächige und/oder streifenförmige Sensorelemente 11a (siehe untere Ansichten in der Figur 4) aufweisen kann. Großflächige und/oder streifenförmige Sensorelemente 11a können dazu dienen, komplexe Merkmale M1, M2, M3, M4, M5 der biometrischen Daten D zu extrahieren und daraus sogar personifizierte Bewegungsabläufe, Gestiken und/oder Greifmuster zu berechnen.

Erfindungsgemäß ist vorgesehen, dass die Steuereinheit 20 aus den biometrischen Daten D des Benutzers mehrere Merkmale M1, M2, M3, M4, M5 extrahiert, und dass die Steuereinheit 20 die Merkmale M1, M2, M3, M4, M5 der biometrischen Daten D in mehreren Stufen I, II auswertet, wie es im Detail in den Figuren 1 bis 3 gezeigt ist.

Extrahieren bedeutet dabei, dass die Steuereinheit 20 aus der Fülle von erfassten biometrischen Daten D mithilfe der Sensoreinheit 11 bestimmte charakteristische Merkmale M1, M2, M3, M4, M5 eines Benutzers erkennt, die eine schnelle, sichere und zuverlässige Authentifizierung des Benutzers ermöglichen können. Die Merkmale M1, M2, M3, M4, M5 der biometrischen Daten D können mit anderen Worten persönliche, insbesondere physische Eigenschaften des Benutzers abbilden, die zur Authentifizierung des Benutzers bei dem Sicherheitssystem 100 dienen können.

Beispiele solcher Merkmale M1, M2, M3, M4, M5 der biometrischen Daten D können folgende Merkmale M1, M2, M3, M4, M5 sein:
- M1: Referenzposition der Finger und/oder der Hand des Benutzers,
- M2: relative Position der einzelnen Fingerspitzen zueinander und/oder zu der jeweiligen Referenzposition der Finger,
- M3: Fingerorientierung,
- M4: Rotation der Finger,
- M5: Fingerabdruck und/oder Handflächenabdruck, usw.

Die Anzahl an fünf möglichen Merkmalen M1, M2, M3, M4, M5 ist lediglich beispielhaft. Selbstverständlich können es mehr oder weniger Merkmale sein, die durch die Steuereinheit 20 aus den erfassten biometrischen Daten D extrahiert und ausgewertet werden.

Vorteilhafterweise erfolgt die stufenweise Authentifizierung des Benutzers nach dem erfindungsgemäßen Verfahren während eines Steckvorganges des Ladesteckers 10 in eine korrespondierende Steckdose am Elektrofahrzeug. Der Benutzer nimmt dabei keinen separaten Authentifizierungsschritt wahr, was eine intuitive und fließende Bedienung der Ladestation 101 ermöglicht, die mit einem erhöhten Benutzerkomfort einhergeht. Des Weiteren ist es von Vorteil, dass der Benutzer dabei keine kontaktlose und/oder kontaktbehaftete Identifizierungsgegenstände, wie z. B. ID-Geber, bspw. in Form von RFID-Chips, mit sich tragen muss. Außerdem wird mithilfe des erfindungsgemäßen Verfahrens die Gefahr eliminiert, dass ein Sicherheitscode von unberechtigten Personen abgefangen und/oder kopiert wird.

Wie es die Figur 1 zeigt, umfasst die erste Stufe I der Auswertung einen Vergleich der Merkmale M1, M2, M3, M4, M5 der biometrischen Daten D mit entsprechenden Schwellenwerten SW1, SW2, SW3, SW4, SW5, um ein grobes Aussortieren von fehlerhaften Authentifizierungsversuchen mit wenig Rechenleistung und/oder Rechenaufwand zu ermöglichen.

Wie es die Figur 1 im Weiteren zeigt, wird bei der ersten Stufe I der Auswertung für jeden Vergleich der Merkmale M1, M2, M3, M4, M5 der biometrischen Daten D mit entsprechenden Schwellenwerten SW1, SW2, SW3, SW4, SW5 ein entsprechendes Vergleichsergebnis E1, E2, E3, E4, E5 in Prozentzahlen zwischen 0% und 100% ausgegeben.

Wie es die Figur 1 noch weiterhin zeigt, wird bei der ersten Stufe I der Auswertung für jeden Vergleich der Merkmale M1, M2, M3, M4, M5 der biometrischen Daten D mit entsprechenden Schwellenwerten SW1, SW2, SW3, SW4, SW5 ein entsprechendes Vergleichsergebnis E1, E2, E3, E4, E5 mit jeweils einem im Vorfeld definierten Wichtungsfaktor W1, W2, W3, W4, W5 verrechnet, um eine Gewichtung im Sinne einer Priorisierung der Merkmale M1, M2, M3, M4, M5 vorzunehmen. Wenn es bspw. aus früheren Abläufen des Verfahrens erkannt wurde, dass bspw. die Fingerorientierung M3 oder der Fingerabdruck M1 ein wichtiges Merkmal ist, bei dem die meisten fehlerhaften Authentifizierungsversuche scheitern, kann diesem Merkmal eine höhere Gewichtung zugeordnet werden, um ein grobes Aussortieren von fehlerhaften Authentifizierungsversuchen zu beschleunigen. Rechnerische Beispiele B1 bis B4 hierzu sind in der Tabelle gezeigt, die rechts in der Figur 1 dargestellt ist.

Außerdem zeigt die Figur 1, dass bei der ersten Stufe I die Auswertung abgebrochen wird und die Authentifizierung des Benutzers als fehlgeschlagen gilt, wenn ein gewichtetes Vergleichsergebnis E*W* von mindestens einem ausgewählten Merkmal M* der biometrischen Daten D eine kritische Grenze KG, bspw. 30%, unterschreitet. Ein rechnerisches Beispiel B1 hierzu ist in der Tabelle gezeigt, die rechts in der Figur 1 dargestellt ist.

Ferner zeigt die Figur 1, dass die Vergleichsergebnisse E1, E2, E3, E4, E5, die mit definierten Wichtungsfaktoren W1, W2, W3, W4, W5 verrechnet wurden, zu einer Gesamtkennzahl GK zusammengerechnet werden, um ein kombiniertes, repräsentatives Vergleichsergebnis E in der ersten Stufe I der Auswertung bereitzustellen.

Weiterhin zeigt die Figur 1:
- dass die Auswertung bei der ersten Stufe I abgebrochen wird und die Authentifizierung des Benutzers als fehlgeschlagen gilt, wenn die Gesamtkennzahl GK eine erste Grenze von z. B. 50% unterschreitet (siehe hierzu ein rechnerisches Beispiel B4 in der Tabelle der Figur 1),
- und/oder dass die Auswertung in die zweite Stufe I übergeleitet wird, wenn die Gesamtkennzahl GK zwischen einer ersten Grenze G1 von z. B. 50% und einer zweiten Grenze G2 von z. B. 80% liegt (siehe hierzu ein rechnerisches Beispiel B3 in der Tabelle der Figur 1),
- und/oder dass die Auswertung bei der ersten Stufe I abgeschlossen wird und die Authentifizierung des Benutzers als erfolgreich gilt, wenn die Gesamtkennzahl GK eine zweite Grenze G2 von z. B. 80% überschreitet (siehe hierzu ein rechnerisches Beispiel B2 in der Tabelle der Figur 1).

Auf diese Weise kann das erfindungsgemäße Verfahren effizienter ausgeführt werden.

Wie es die Figur 2 zeigt, umfasst die zweite Stufe II der Auswertung eine Analyse des zeitlichen Verlaufs D(t) der biometrischen Daten D mithilfe einer Auswertungslogik 21, um ein feines Analysieren von biometrischen Daten D zu ermöglichen und vorzugsweise eine Greifmustererkennung zur Authentifizierung des Benutzers durchzuführen.

Des Weiteren zeigt die Figur 2, dass bei der zweiten Stufe II der Auswertung die Merkmale M1, M2, M3, M4, M5 der biometrischen Daten D zu, vorzugsweise zeitabhängigen, Funktionsmerkmalen F1, F2, F3, F4, F5, insbesondere zu bestimmten diskreten Zeitpunkten oder kontinuierlich, verarbeitet werden, um ganze Bewegungsabläufe, Gestiken und/oder Greifmuster zu erkennen, die die Zuverlässigkeit und die Sicherheit der Authentifizierung erhöhen können.

Hierzu können bestimmte Identitäten i zum Authentifizieren des Benutzers angelegt werden, die durch eine Kombination an speziellen Funktionsmerkmalen F1, F2, F3, F4, F5 charakterisiert sein können.

Als Beispiele der Funktionsmerkmale F1, F2, F3, F4, F5 der biometrischen Daten D können folgende Funktionsmerkmale F1, F2, F3, F4, F5 dienen:
- F1: Berührte Fläche (Anzahl, Orte),
- F2: Ausgeübter Druck (Anzahl, Orte),
- F3: Erkannte Finger (Anzahl, Typ),
- F4: Dauer von bestimmten Abschnitten des Vorganges (z. B. zwischen der Berührung des ersten Fingers und der Berührung des zweiten Fingers, usw.

Auch hier ist die Anzahl an vier möglichen Funktionsmerkmalen F1, F2, F3, F4, F5 lediglich beispielhaft. Selbstverständlich können es mehr oder weniger Merkmale sein, die durch die Steuereinheit 20 aus den erfassten biometrischen Daten D extrahiert und ausgewertet werden.

Die Figur 2 zeigt schematisch, dass bei der zweiten Stufe II der Auswertung die Funktionsmerkmale F1, F2, F3, F4, F5 mit entsprechenden Funktionsmerkmalen F1(i), F2(i), F3(i), F4(i), F5(i) verschiedener Identitäten i verglichen werden. Dies kann außerdem zeitaufgelöst geschehen.

Ferner zeigt die Figur 2, dass beim Vergleichen der Funktionsmerkmale F1, F2, F3, F4, F5 mit entsprechenden Funktionsmerkmalen F1(i), F2(i), F3(i), F4(i), F5(i) verschiedener Identitäten i ein bestimmter Abstand d berücksichtigt wird, der nicht überschritten werden darf, um das Verfahren zu verschlanken (F - F(i) < d).

Weiterhin zeigt die Figur 2, dass beim Vergleichen der Funktionsmerkmale F1, F2, F3, F4, F5 mit entsprechenden Funktionsmerkmalen F1(i), F2(i), F3(i), F4(i), F5(i) verschiedener Identitäten i die Ergebnisse F(I) der Auswertung bei der ersten Stufe I berücksichtigt werden, um das Verfahren noch weiter zu verschlanken.

Des Weiteren zeigt die Figur 2 links schematisch im Ablaufdiagramm und rechts in der Tabelle, dass bei jeder Übereinstimmung der Funktionsmerkmale F1, F2, F3, F4, F5 mit entsprechenden Funktionsmerkmalen F1(i), F2(i), F3(i), F4(i), F5(i) bestimmter bzw. erkannter Identitäten i* ein Treffer T für die jeweilige Identität i* zu einer Summe S aufsummiert wird.

Zudem zeigt die Figur 2 rechts in der Tabelle, dass die jeweilige Identität i als erkannt gilt, die die meisten Treffer T erhält. Im Beispiel in der Tabelle der Figur 2 ist es bspw. die Identität i4.

Außerdem zeigt die Figur 2 links schematisch im Ablaufdiagramm, dass das Verfahren vorsehen kann, dass die jeweilige Identität i* als erkannt gilt, die eine erste, insbesondere bestimmte Anzahl S1 an Treffern T, sog. Mindestquote, erhält. Mithin kann das Verfahren schneller abgeschlossen werden.

Ferner zeigt die Figur 2 links schematisch im Ablaufdiagramm, dass, wenn eine bestimmte bzw. erkannte Identität eine zweite, insbesondere bestimmte, Anzahl S2 an Treffern T, sog. Höchstquote, erhält, die Funktionsmerkmale F1, F2, F3, F4, F5 dieser bestimmten Identität i* für ein Aktualisieren und/oder Verifizieren dieser bestimmten Identität i* und/oder für ein Anlernen der Auswertungslogik 21 verwendet werden können. Somit kann mithilfe des erfindungsgemäßen Verfahrens eine selbstlernende, adaptive oder einfach gesagt intelligente Auswertungslogik 21 innerhalb der Steuereinheit 20 bereitgestellt werden.

Weiterhin ist es im Rahmen der Erfindung denkbar, dass das erfindungsgemäße Verfahren zum Anlegen und/oder Anlernen neuer Identitäten i genutzt werden kann. Dabei können beim Ausführen des erfindungsgemäßen Verfahrens Datenbanken für die Merkmale M1, M2, M3, M4, M5 der ersten Stufe I und die Funktionsmerkmale F1, F2, F3, F4, F5 sowie der daraus aufgestellten Identitäten i erstellt werden.

Des Weiteren ist es im Rahmen der Erfindung denkbar, dass ein Anlernen der Auswertungslogik 21 bewusst bzw. manuell eingeleitet, bspw. über ein Konfigurationsmenü an der Ladestation 101 erfolgen kann, und/oder dass ein Anlernen der Auswertungslogik 21 automatisiert und/oder kontinuierlich erfolgen kann, indem bspw. ein Mittelwert extrahierter und ausgewerteter Merkmale M1, M2, M3, M4, M5 als Schwellenwerte SW1, SW2, SW3, SW4, SW5 und/oder aus diesen Merkmalen M1, M2, M3, M4, M5 hergeleiteter Funktionsmerkmale F1, F2, F3, F4, F5 immer wieder als Referenzwerte für die bestimmte bzw. erkannte Identität i* aktualisiert wird.

Wie es die Figur 5 anschließend zeigt, kann mindestens ein Verfahrensschritt zum Extrahieren der Merkmale M1, M2, M3, M4, M5 aus den biometrischen Daten D, Durchführen einer ersten Stufe I der Auswertung und/oder Durchführen einer zweiten Stufe II der Auswertung auf ein Backend 102 ausgelagert werden, um die Rechenleistung ganz oder zum Teil aus dem Sicherheitssystem 100 an der Ladestation 101 an das Backend 102 auszulagern.

Das Sicherheitssystem 100 gemäß der Figur 5 kann insbesondere dadurch gekennzeichnet sein, dass die Steuereinheit 20 speziell dazu ausgeführt ist, ein Verfahren ganz oder zum Teil durchzuführen, welches wie oben beschrieben ablaufen kann.

Die voranstehende Beschreibung der Figuren beschreibt die vorliegende Erfindung ausschließlich im Rahmen von Beispielen. Selbstverständlich können einzelne Merkmale der Ausführungsformen, sofern es technisch sinnvoll ist, frei miteinander kombiniert werden, wobei der Schutzumfang der Erfindung in den beigefügten Ansprüchen definiert wird.

### Bezugszeichenliste

- 10: Ladestecker
- 11: Sensoreinheit
- 11a: Sensorelement

- 20: Steuereinheit
- 21: Auswertungslogik

- 100: Sicherheitssystem
- 101: Ladestation
- 102: Backend

- I: erste Stufe
- II: zweite Stufe

- D: biometrische Daten

- M: Merkmal
- M1: Merkmal
- M2: Merkmal
- M3: Merkmal
- M4: Merkmal
- M5: Merkmal
- M*: ausgewähltes Merkmal

- E: Vergleichsergebnis
- E1: Vergleichsergebnis
- E2: Vergleichsergebnis
- E3: Vergleichsergebnis
- E4: Vergleichsergebnis
- E5: Vergleichsergebnis

- EW: gewichtetes Vergleichsergebnis von mindestens einem Merkmal
- E*W*: gewichtetes Vergleichsergebnis von einem ausgewählten Merkmal

- KG: kritische Grenze
- GK: Gesamtkennzahl
- G1: erste Grenze
- G2: zweite Grenze

- SW1: Schwellenwert
- SW2: Schwellenwert
- SW3: Schwellenwert
- SW4: Schwellenwert
- SW5: Schwellenwert

- W1: Wichtungsfaktor
- W2: Wichtungsfaktor
- W3: Wichtungsfaktor
- W4: Wichtungsfaktor
- W5: Wichtungsfaktor

- F: Funktionsmerkmal
- F1: Funktionsmerkmal
- F2: Funktionsmerkmal
- F3: Funktionsmerkmal
- F4: Funktionsmerkmal

- F1(i): Funktionsmerkmal verschiedener Identitäten
- F2(i): Funktionsmerkmal verschiedener Identitäten
- F3(i): Funktionsmerkmal verschiedener Identitäten
- F4(i): Funktionsmerkmal verschiedener Identitäten

- i: Identität
- i*: bestimmte Identität

- t: Zeit

- T: Treffer

- S: Summe
- S1: erste Anzahl an Treffern
- S2: zweite Anzahl an Treffern

## Patentansprüche

1. Verfahren zur Steuerung eines Sicherheitssystems (100) einer Ladestation (101) zum Aufladen von Elektrofahrzeugen,
wobei das Sicherheitssystem (100) folgende Elemente aufweist:
einen Ladestecker (10),
wobei der Ladestecker (10) eine Sensoreinheit (11) zur Erfassung von biometrischen Daten (D) eines Benutzers aufweist, die zur Authentifizierung des Benutzers bei dem Sicherheitssystem (100) dienen,
und eine Steuereinheit (20) zum Auswerten von biometrischen Daten (D) des Benutzers,
wobei die Steuereinheit (20) aus den biometrischen Daten (D) des Benutzers mehrere Merkmale (M1, M2, M3, M4, M5) extrahiert,
und die Steuereinheit (20) die Merkmale (M1, M2, M3, M4, M5) der biometrischen Daten (D) in mehreren Stufen (I, II) auswertet,
**dadurch gekennzeichnet, dass**
die Auswertung in einer ersten Stufe ein grobes Aussortieren fehlerhafter Authentifizierungsversuche ermöglicht,
wobei die Auswertung in einer zweiten Stufe ein feines Auswerten von Merkmalen (M1, M2, M3, M4, M5) der biometrischen Daten (D) ermöglicht,
und wobei während der ersten Stufe (I) und der zweiten Stufe (II) weitere Schritte vorgesehen sind, die ein schnelles Abschließen der Auswertung ermöglichen,
dass die mehreren Stufen (I, II) der Auswertung eine erste Stufe (I) umfassen, bei der die Merkmale (M1, M2, M3, M4, M5) der biometrischen Daten (D) mit entsprechenden Schwellenwerten (SW1, SW2, SW3, SW4, SW5) verglichen werden, und dass die mehreren Stufen (I, II) der Auswertung eine zweite Stufe (II) umfassen, bei der der zeitliche Verlauf der biometrischen Daten (D) mithilfe einer Auswertungslogik (21) analysiert wird, um eine Greifmustererkennung zur Authentifizierung des Benutzers durchzuführen.

2. Verfahren nach Anspruch 1,
**dadurch gekennzeichnet,**
**dass** bei der ersten Stufe (I) der Auswertung für jeden Vergleich der Merkmale (M1, M2, M3, M4, M5) der biometrischen Daten (D) mit entsprechenden Schwellenwerten (SW1, SW2, SW3, SW4, SW5) ein entsprechendes Vergleichsergebnis (E1, E2, E3, E4, E5) in Prozentzahlen zwischen 0% und 100% ausgegeben wird.

3. Verfahren nach einem der vorhergehenden Ansprüche,
**dadurch gekennzeichnet,**
**dass** bei der ersten Stufe (I) der Auswertung für jeden Vergleich der Merkmale (M1, M2, M3, M4, M5) der biometrischen Daten (D) mit entsprechenden Schwellenwerten (SW1, SW2, SW3, SW4, SW5) ein entsprechendes Vergleichsergebnis (E1, E2, E3, E4, E5) mit jeweils einem im Vorfeld definierten Wichtungsfaktor (W1, W2, W3, W4, W5) verrechnet wird.

4. Verfahren nach einem der vorhergehenden Ansprüche,
**dadurch gekennzeichnet,**
**dass** bei der ersten Stufe (I) die Auswertung abgebrochen wird und die Authentifizierung des Benutzers als fehlgeschlagen gilt,
wenn ein gewichtetes Vergleichsergebnis (E*W*) von mindestens einem ausgewählten Merkmal (M*) der biometrischen Daten (D) eine kritische Grenze (KG) unterschreitet,
oder wenn mindestens ein gewichtetes Vergleichsergebnis (EW) von mindestens einem Merkmal (M) der Merkmale (M1, M2, M3, M4, M5) der biometrischen Daten (D) eine kritische Grenze (KG) unterschreitet.

5. Verfahren nach Anspruch 3,
**dadurch gekennzeichnet,**
**dass** die Vergleichsergebnisse (E1, E2, E3, E4, E5), die mit definierten Wichtungsfaktoren (W1, W2, W3, W4, W5) verrechnet wurden, zu einer Gesamtkennzahl (GK) zusammengerechnet werden.

6. Verfahren nach Anspruch 5,
**dadurch gekennzeichnet,**
**dass** die Auswertung bei der ersten Stufe (I) abgebrochen wird und die Authentifizierung des Benutzers als fehlgeschlagen gilt,
wenn die Gesamtkennzahl (GK) eine erste Grenze (G1) unterschreitet, und/oder dass die Auswertung in die zweite Stufe (II) übergeleitet wird,
wenn die Gesamtkennzahl (GK) zwischen einer ersten Grenze (G1) und einer zweiten Grenze (G2) liegt,
und/oder dass die Auswertung bei der ersten Stufe (I) abgeschlossen wird und die Authentifizierung des Benutzers als erfolgreich gilt,
wenn die Gesamtkennzahl (GK) eine zweite Grenze (G2) überschreitet.

7. Verfahren nach einem der vorhergehenden Ansprüche,
**dadurch gekennzeichnet,**
**dass** bei der zweiten Stufe (II) der Auswertung die Merkmale (M1, M2, M3, M4, M5) der biometrischen Daten (D) zu Funktionsmerkmalen (F1, F2, F3, F4) verarbeitet werden.

8. Verfahren nach Anspruch 7,
**dadurch gekennzeichnet,**
**dass** bei der zweiten Stufe (II) der Auswertung die Funktionsmerkmale (F1, F2, F3, F4) mit entsprechenden Funktionsmerkmalen (F1(i), F2(i), F3(i), F4(i)) verschiedener Identitäten (i) verglichen werden.

9. Verfahren nach Anspruch 8,
**dadurch gekennzeichnet,**
**dass** beim Vergleichen der Funktionsmerkmale (F1, F2, F3, F4, F5) mit entsprechenden Funktionsmerkmalen (F1(i), F2(i), F3(i), F4(i), F5(i)) verschiedener Identitäten (i) Ergebnisse der Auswertung bei der ersten Stufe (I) berücksichtigt werden.

10. Verfahren nach Anspruch 8 oder 9,
**dadurch gekennzeichnet,**
**dass** beim Vergleichen der Funktionsmerkmale (F1, F2, F3, F4, F5) mit entsprechenden Funktionsmerkmalen (F1(i), F2(i), F3(i), F4(i), F5(i)) verschiedener Identitäten (i) ein bestimmter Abstand (d) berücksichtigt wird, der nicht überschritten werden darf.

11. Verfahren nach einem der vorhergehenden Ansprüche 8 bis 10,
**dadurch gekennzeichnet,**
**dass** das Verfahren zum Anlegen und/oder Anlernen neuer Identitäten (i) genutzt wird.

12. Verfahren nach einem der vorhergehenden Ansprüche,
**dadurch gekennzeichnet,**
**dass** mindestens ein Verfahrensschritt zum Extrahieren der Merkmale (M1, M2, M3, M4, M5) aus den biometrischen Daten (D), Durchführen einer ersten Stufe (I) der Auswertung und/oder Durchführen einer zweiten Stufe (II) der Auswertung auf ein Backend (102) ausgelagert wird.

13. Sicherheitssystem (100) für eine Ladestation (101) zum Aufladen von Elektrofahrzeugen, aufweisend:
einen Ladestecker (10),
wobei der Ladestecker (10) eine Sensoreinheit (11) zur Erfassung von biometrischen Daten (D) eines Benutzers aufweist, die zur Authentifizierung des Benutzers bei dem Sicherheitssystem (100) dienen,
und eine Steuereinheit (20) zum Auswerten von biometrischen Daten (D) des Benutzers,
**dadurch gekennzeichnet,**
**dass** die Steuereinheit (20) dazu ausgeführt ist, aus den biometrischen Daten (D) des Benutzers mehrere Merkmale (M1, M2, M3, M4, M5) zu extrahieren und die Merkmale (M1, M2, M3, M4, M5) der biometrischen Daten (D) in mehreren Stufen (I, II) auszuwerten,
und **dass** die Steuereinheit (20) dazu ausgeführt ist, ein Verfahren nach einem der vorhergehenden Ansprüche durchzuführen.

## Claims

1. Method for controlling a security system (100) of a charging station (101) for charging electric vehicles,
the security system (100) having the following elements:
a charging plug (10),
the charging plug (10) having a sensor unit (11) for detecting biometric data (D) of a user, which data are used to authenticate the user in the security system (100),
and a control unit (20) for evaluating biometric data (D) of the user,
the control unit (20) extracting a plurality of features (M1, M2, M3, M4, M5) from the biometric data (D) of the user,
and the control unit (20) evaluating the features (M1, M2, M3, M4, M5) of the biometric data (D) in a plurality of stages (I, II),
**characterized in that**
in a first stage, the evaluation makes it possible to roughly separate out erroneous authentication attempts,
in a second stage the evaluation making it possible to carry out a refined evaluation of features (M1, M2, M3, M4, M5) of the biometric data (D),
and, during the first stage (I) and the second stage (II), further steps being provided which make it possible to complete the evaluation rapidly,
**in that** the plurality of stages (I, II) of the evaluation comprise a first stage (I) in which the features (M1, M2, M3, M4, M5) of the biometric data (D) are compared with corresponding threshold values (SW1, SW2, SW3, SW4, SW5),
and **in that** the plurality of stages (I, II) of the evaluation comprise a second stage (II) in which the temporal progression of the biometric data (D) is analyzed by means of evaluation logic (21) in order to detect gripping patterns for the purpose of authenticating the user.

2. Method according to claim 1,
**characterized in that**
in the first stage (I) of the evaluation, for each comparison of the features (M1, M2, M3, M4, M5) of the biometric data (D) with corresponding threshold values (SW1, SW2, SW3, SW4, SW5), a corresponding comparison result (E1, E2, E3, E4, E5) is output in percentages between 0% and 100%.

3. Method according to either of the preceding claims,
**characterized in that**
in the first stage (I) of the evaluation, for each comparison of the features (M1, M2, M3, M4, M5) of the biometric data (D) with corresponding threshold values (SW1, SW2, SW3, SW4, SW5), a corresponding comparison result (E1, E2, E3, E4, E5) is offset against a weighting factor (W1, W2, W3, W4, W5) defined in advance.

4. Method according to any of the preceding claims,
**characterized in that**
in the first stage (I), the evaluation is aborted and the authentication of the user is deemed to have failed
if a weighted comparison result (E*W*) of at least one selected feature (M*) of the biometric data (D) falls below a critical limit (KG),
or if at least one weighted comparison result (EW) of at least one feature (M) of the features (M1, M2, M3, M4, M5) of the biometric data (D) falls below a critical limit (KG).

5. Method according to claim 3,
**characterized in that**
the comparison results (E1, E2, E3, E4, E5) which were offset against defined weighting factors (W1, W2, W3, W4, W5) are added together to form a total characteristic value (GK).

6. Method according to claim 5,
**characterized in that**
the evaluation is aborted in the first stage (I) and the authentication of the user is deemed to have failed
if the total characteristic value (GK) falls below a first limit (G1),
and/or **in that** the evaluation is transitioned to the second stage (II)
if the total characteristic value (GK) is between a first limit (G1) and a second limit (G2),
and/or **in that** the evaluation is completed in the first stage (I) and the authentication of the user is deemed successful
if the total characteristic value (GK) exceeds a second limit (G2).

7. Method according to any of the preceding claims,
**characterized in that**
in the second stage (II) of the evaluation, the features (M1, M2, M3, M4, M5) of the biometric data (D) are processed to form functional features (F1, F2, F3, F4).

8. Method according to claim 7,
**characterized in that**
in the second stage (II) of the evaluation, the functional features (F1, F2, F3, F4) are compared with corresponding functional features (F1(i), F2(i), F3(i), F4(i)) of various identities (i).

9. Method according to claim 8,
**characterized in that**
when comparing the functional features (F1, F2, F3, F4, F5) with corresponding functional features (F1(i), F2(i), F3(i), F4(i), F5(i)) of various identities (i), results of the evaluation are taken into account in the first stage (I).

10. Method according to either claim 8 or claim 9,
**characterized in that**
when comparing the functional features (F1, F2, F3, F4, F5) with corresponding functional features (F1(i), F2(i), F3(i), F4(i), F5(i)) of various identities (i), a certain distance (d) that must not be exceeded is taken into account.

11. Method according to any of the preceding claims 8 to 10,
**characterized in that**
the method is used for creating and/or teaching new identities (i).

12. Method according to any of the preceding claims,
**characterized in that**
at least one method step for extracting the features (M1, M2, M3, M4, M5) from the biometric data (D), performing a first stage (I) of the evaluation and/or performing a second stage (II) of the evaluation is outsourced to a back end (102).

13. Security system (100) for a charging station (101) for charging electric vehicles, comprising:
a charging plug (10),
the charging plug (10) having a sensor unit (11) for detecting biometric data (D) of a user, which data are used to authenticate the user in the security system (100),
and a control unit (20) for evaluating biometric data (D) of the user,
**characterized in that**
the control unit (20) is designed to extract a plurality of features (M1, M2, M3, M4, M5) from the biometric data (D) of the user and to evaluate the features (M1, M2, M3, M4, M5) of the biometric data (D) in a plurality of stages (I, II),
and **in that** the control unit (20) is designed to carry out a method according to any of the preceding claims.

## Revendications

1. Procédé de commande d'un système de sécurité (100) d'une station de charge (101) pour la charge de véhicules électriques,
dans lequel le système de sécurité (100) comprend les éléments suivants :
une fiche de charge (10),
dans lequel la fiche de charge (10) présente une unité de capteur (11) destinée à la détection de données biométriques (D) d'un utilisateur, qui servent à l'authentification de l'utilisateur par le système de sécurité (100),
et une unité de commande (20) destinée à l'évaluation des données biométriques (D) de l'utilisateur,
dans lequel l'unité de commande (20) extrait des données biométriques (D) de l'utilisateur plusieurs caractéristiques (M1, M2, M3, M4, M5),
et l'unité de commande (20) évalue les caractéristiques (M1, M2, M3, M4, M5) des données biométriques (D) en plusieurs étapes (I, II),
**caractérisé en ce que**
l'évaluation dans une première étape permet un tri grossier des tentatives d'authentification erronées,
dans lequel l'évaluation dans une seconde étape permet une évaluation fine des caractéristiques (M1, M2, M3, M4, M5) des données biométriques (D),
et dans lequel, pendant la première étape (I) et la seconde étape (II), d'autres étapes sont prévues, qui permettent une clôture rapide de l'évaluation,
**que** les plusieurs étapes (I, II) de l'évaluation comprennent une première étape (I), dans laquelle les caractéristiques (M1, M2, M3, M4, M5) des données biométriques (D) sont comparées à des seuils correspondants (SW1, SW2, SW3, SW4, SW5),
et **que** les plusieurs étapes (I, II) de l'évaluation comprennent une seconde étape (II), dans laquelle la chronologie des données biométriques (D) est analysée à l'aide d'une logique d'évaluation (21), afin de réaliser une reconnaissance de modèle de préhension pour l'authentification de l'utilisateur.

2. Procédé selon la revendication 1,
**caractérisé en ce**
**que** dans la première étape (I) de l'évaluation, pour chaque comparaison des caractéristiques (M1, M2, M3, M4, M5) des données biométriques (D) avec des seuils correspondants (SW1, SW2, SW3, SW4, SW5), un résultat de comparaison correspondant (E1, E2, E3, E4, E5) est indiqué en pourcentage entre 0 % et 100 %.

3. Procédé selon l'une quelconque des revendications précédentes,
**caractérisé en ce**
**que** dans la première étape (I) de l'évaluation, pour chaque comparaison des caractéristiques (M1, M2, M3, M4, M5) des données biométriques (D) avec des seuils correspondants (SW1, SW2, SW3, SW4, SW5), un résultat de comparaison correspondant (E1, E2, E3, E4, E5) est compensé respectivement par un facteur de pondération défini au préalable (W1, W2, W3, W4, W5).

4. Procédé selon l'une quelconque des revendications précédentes,
**caractérisé en ce**
**que** dans la première étape (I), l'évaluation est interrompue et l'authentification de l'utilisateur est considérée comme ayant échoué,
lorsqu'un résultat de comparaison (E*W*) pondéré d'au moins une caractéristique (M*) choisie des données biométriques (D) passe en dessous d'une limite critique (KG),
ou lorsqu'un résultat de comparaison (EW) pondéré d'au moins une caractéristique (M) des caractéristiques (M1, M2, M3, M4, M5) des données biométriques (D) passe en dessous d'une limite critique (KG).

5. Procédé selon la revendication 3,
**caractérisé en ce**
**que** les résultats de comparaison (E1, E2, E3, E4, E5), qui ont été compensés avec les facteurs de pondération (W1, W2, W3, W4, W5) définis, sont additionnés pour donner un ratio global (GK).

6. Procédé selon la revendication 5,
**caractérisé en ce**
**que** l'évaluation dans la première étape (I) est interrompue et l'authentification de l'utilisateur est considérée comme ayant échoué,
lorsque le ratio total (GK) passe en dessous d'une première limite (G1), et/ou que l'évaluation dans la seconde étape (II) est transférée,
lorsque le ratio total (GK) est situé entre une première limite (G1) et une seconde limite (G2),
et/ou que l'évaluation dans la première étape (I) est clôturée et l'authentification de l'utilisateur est considérée comme ayant réussi,
lorsque le ratio total (GK) passe au-dessus d'une seconde limite (G2).

7. Procédé selon l'une quelconque des revendications précédentes,
**caractérisé en ce**
**que** dans la seconde étape (II) de l'évaluation, les caractéristiques (M1, M2, M3, M4, M5) des données biométriques (D) sont transformées en caractéristiques fonctionnelles (F1, F2, F3, F4).

8. Procédé selon la revendication 7,
**caractérisé en ce**
**que** dans la seconde étape (II) de l'évaluation, les caractéristiques fonctionnelles (F1, F2, F3, F4) sont comparées à des caractéristiques fonctionnelles correspondantes (F1(i), F2(i), F3(i), F4(i)) de différentes identités (i).

9. Procédé selon la revendication 8,
**caractérisé en ce**
**que** lors de la comparaison des caractéristiques fonctionnelles (F1, F2, F3, F4, F5) avec les caractéristiques fonctionnelles correspondantes (F1(i), F2(i), F3(i), F4(i), F5(i)) de différentes identités (i), les résultats de l'évaluation sont pris en compte dans la première étape (I).

10. Procédé selon la revendication 8 ou 9,
**caractérisé en ce**
**que** lors de la comparaison des caractéristiques fonctionnelles (F1, F2, F3, F4, F5) avec les caractéristiques fonctionnelles correspondantes (F1(i), F2(i), F3(i), F4(i), F5(i)) de différentes identités (i), un écart (d) déterminé qui ne doit pas être dépassé est pris en compte.

11. Procédé selon l'une des revendications précédentes 8 à 10,
**caractérisé en ce**
**que** le procédé est utilisé pour la création et/ou l'apprentissage de nouvelles identités (i).

12. Procédé selon l'une quelconque des revendications précédentes,
**caractérisé en ce**
**qu'**au moins une étape de procédé destinée à l'extraction des caractéristiques (M1, M2, M3, M4, M5) à partir des données biométriques (D), la réalisation d'une première étape (I) de l'évaluation et/ou la réalisation d'une seconde étape (II) de l'évaluation est externalisée vers un système dorsal (102).

13. Système de sécurité (100) pour une station de charge (101) destinée à la charge de véhicules électriques, présentant :
une fiche de charge (10),
dans lequel la fiche de charge (10) présente une unité de capteur (11) destinée à la détection de données biométriques (D) d'un utilisateur, qui servent à l'authentification de l'utilisateur par le système de sécurité (100),
et une unité de commande (20) destinée à l'évaluation des données biométriques (D) de l'utilisateur,
**caractérisé en ce**
**que** l'unité de commande (20) est conçue pour extraire des données biométriques (D) de l'utilisateur plusieurs caractéristiques (M1, M2, M3, M4, M5) et pour évaluer les caractéristiques (M1, M2, M3, M4, M5) des données biométriques (D) en plusieurs étapes (I, II),
et **que** l'unité de commande (20) est conçue pour réaliser un procédé selon l'une quelconque des revendications précédentes.
